# FASCICULE DE BREVET EUROPEEN

(11) **EP 2 461 065 B1**
(45) Date de publication et mention de la délivrance du brevet: **29.05.2013**
(21) Numéro de dépôt: 11190633.5
(22) Date de dépôt: 24.11.2011
(51) Int. Cl.: F16F 1/02

(54) **Dispositif d'articulation à faisceau de brins en matériau à mémoire de forme**
Gelenkeinrichtung mit einem Strängbündel aus Formgedächtnismaterial
Hinge device with a strand bundle in a shape memory material

(30) Priorité: 06.12.2010 FR 1004732
(43) Date de publication de la demande: 06.06.2012
(73) Titulaire: Centre National d'Etudes Spatiales (CNES), 75039 Paris Cedex 01 (FR)
(72) Inventeur: Sicre, Jacques, 32600 L'Isle Jourdain (FR)
(74) Mandataire: Cabinet BARRE LAFORGUE & associés

(56) Documents cités:
- EP-A1- 0 712 145
- JP-A- 2 007 882
- US-A1- 2002 195 177
- US-B1- 7 354 033

## Description

L'invention concerne le domaine technique des éléments de liaison entre des pièces ou des éléments au sens général, permettant un déplacement angulaire entre lesdites pièces et elle vise, plus particulièrement, les articulations dont au moins une partie de l'énergie de motorisation est fournie par la déformation d'un matériau à mémoire de forme, notamment lors d'un changement de la température dudit matériau à mémoire de forme.

Dans tout le texte, un matériau à mémoire de forme est un matériau présentant au moins deux formes stables à deux températures différentes, dont l'une au moins correspond à une forme géométrique particulière. La forme d'un tel matériau est modifiée par transformation de phase solide-solide (dites austénitique-martensitique par comparaison aux aciers notamment) lorsqu'il est soumis à une modification de son environnement, notamment lorsqu'il est chauffé au dessus - ou refroidi en dessous - d'une température, dite température de transformation, qui marque le début d'une plage de températures dans laquelle le matériau se déforme progressivement entre une forme et une autre.

Ainsi, un tel matériau à mémoire de forme peut être du type « simple sens », c'est-à-dire qu'il se déforme vers une forme stable uniquement lorsqu'il est chauffé au-delà de sa température de transformation. Un tel matériau à mémoire de forme peut aussi être du type « double sens », présentant la même caractéristique qu'un matériau à mémoire de forme « simple sens » mais qui se déforme aussi vers une forme stable lorsqu'il est refroidi au-dessous de sa température de transformation.

Les matériaux à mémoire de forme les plus connus sont des alliages métalliques parmi lesquels notamment les alliages nickel-titane (Ni-Ti).

On connaît des dispositifs d'articulation actionnés par un organe moteur en matériau à mémoire de forme. L'électricité étant souvent la source d'énergie la plus facile d'utilisation elle est privilégiée pour le chauffage des organes moteurs en matériau à mémoire de forme par effet Joule.

Cependant, dans les dispositifs d'articulation connus, une limite physique s'oppose à l'utilisation des organes moteurs en matériau à mémoire de forme, notamment à bord de véhicules dont les ressources en énergie sont limitées, et dont on souhaite souvent réduire la masse. En effet, il faut souvent renoncer à l'utilisation d'un organe moteur en matériau à mémoire de forme à cause d'une source électrique d'intensité limitée qui n'est pas suffisante pour chauffer par effet Joule et donc déformer suffisamment le matériau à mémoire de forme. Alternativement, fournir des intensités d'alimentation élevées pour parvenir à un chauffage suffisant du matériau à mémoire de forme requiert l'utilisation de transformateurs de puissance qui sont coûteux, qui ajoutent de la masse et du volume au véhicule, et qui entraîne des pertes d'énergie.

C'est pourquoi les organes moteurs en matériau à mémoire de forme n'ont jusqu'alors que très peu été utilisés au profit d'organes moteurs plus classiques et moins consommateurs de puissance électrique tels que des ressorts par exemple, notamment des ressorts spiraux, ou encore des lames de Carpentier.

Les lames de Carpentier, aussi souvent appelées joints de Carpentier, présentent l'avantage de réaliser les deux fonctions d'une articulation motorisée, à savoir l'actionnement et le guidage en rotation. Elles assurent de plus un verrouillage en position déployée. Elles ont donc été adoptées dans des applications de dispositifs d'articulation pour le déploiement unique d'une structure, notamment dans le domaine du déploiement de panneaux solaires, de mâts déployables, d'ouverture de couvercles, etc., d'un satellite (cf. par exemple EP 0 939 727).

Cependant, les lames de Carpentier utilisées seules présentent de nombreux inconvénients. En particulier, elles partagent avec les ressorts l'inconvénient majeur de libérer l'énergie mécanique qu'elles stockent de façon incontrôlée. Cela peut générer des chocs mécaniques, en particulier des chocs composés de vibrations particulièrement intenses en fin de déploiement. Ces chocs sont généralement néfastes pour le système sur lequel l'articulation est montée.

Ainsi, la libération d'énergie mécanique par un ressort comprimé ou une lame de Carpentier est brutale et peut conduire à la détérioration des éléments mobiles montés à chaque extrémité de l'articulation.

Pour résister à ce choc en fin de déploiement, de telles articulations et/ou pièces d'extrémité sont souvent surdimensionnées, ce qui a pour inconvénient d'induire un surplus de masse et/ou de volume important.

Ainsi, lorsque des systèmes sont équipés d'articulations motorisées par des ressorts, des lames de Carpentier ou tout autre organe élastique ou au sens général tout organe emmagasinant une énergie susceptible d'être libérée brutalement, ils sont susceptibles d'être endommagés lors du déploiement (et/ou pliage) de cette articulation. C'est d'autant plus le cas lorsque plusieurs éléments d'un même système sont reliés entre eux par plusieurs articulations de ce type en série (par exemple les différents panneaux solaires d'un satellite). En effet dans ce dernier cas, le déploiement (et/ou pliage) de l'articulation est violent et difficilement contrôlable, avec pour risque des collisions entre les différents éléments articulés par ces articulations.

C'est pourquoi ces types de motorisation sont parfois remplacés ou utilisés en combinaison avec un matériau à mémoire de forme permettant de contrôler leur vitesse de déploiement, sous la forme notamment de blocs de matériau à mémoire de forme (cf. par exemple US 7,354,033). Utiliser un bloc en matériau à mémoire de forme permet d'obtenir une énergie mécanique suffisante à condition de les chauffer suffisamment. Or leur chauffage est problématique : grosses résistances de chauffage nécessaires, chauffage par effet Joule demandant une intensité élevée, etc... Du fait de leurs inconvénients, ces dispositifs ne sont en outre pas compatibles avec des systèmes autonomes dont on souhaite économiser les ressources en énergie, par exemple des satellites ou des aéronefs.

L'invention vise à pallier ces inconvénients en proposant un dispositif d'articulation motorisé dont l'organe moteur ne se décharge pas brutalement de son énergie.

L'invention vise encore un tel dispositif d'articulation motorisé qui ne provoque que peu ou pas de chocs en fin de déploiement lorsqu'il est en mouvement, et notamment pas de choc mécanique important en fin de pliement/déploiement.

L'invention vise en outre un tel dispositif d'articulation motorisé qui est auto-verrouillant et qui ne peut donc pas être déverrouillé spontanément d'une position déployée (et/ou pliée).

L'invention vise aussi un dispositif d'articulation dont la vitesse de déploiement (et/ou le pliage) est contrôlée, en particulier lorsqu'il comporte un organe auto-motorisé.

Plus particulièrement, l'invention vise un dispositif d'articulation motorisé dont au moins une portion de l'énergie mécanique motrice et/ou de freinage/amortissement provient de la déformation d'un matériau à mémoire de forme.

L'invention vise aussi à proposer un tel dispositif d'articulation comportant au moins un élément en matériau à mémoire de forme dont le rapport de la puissance mécanique qu'il fournit sur l'énergie nécessaire à son chauffage est meilleur que celui des organes moteurs en matériau à mémoire de forme des dispositifs d'articulation connus de l'état de la technique.

Plus particulièrement, l'invention vise à proposer un tel dispositif d'articulation nécessitant une intensité de courant électrique relativement faible pour son fonctionnement.

Pour ce faire, l'invention concerne un dispositif d'articulation reliant deux pièces d'extrémité, adapté pour pouvoir occuper au moins une position pliée et au moins une position déployée, et comportant un dispositif en matériau à mémoire de forme reliant les deux pièces d'extrémité, caractérisé en ce que :
- le dispositif en matériau à mémoire de forme comprend au moins un faisceau de brins de fil en matériau à mémoire de forme électriquement conducteur, latéralement adjacents et latéralement électriquement isolés les uns des autres, chaque brin tendant à se déformer en flexion à partir d'une température, dite température de transformation, vers une forme mémorisée,
- ladite forme mémorisée de chaque brin de chaque faisceau étant choisie de telle sorte qu'une déformation conjointe en flexion de chacun des brins vers ladite forme mémorisée corresponde à une déformation en flexion du faisceau,
- chaque faisceau comprend deux bornes d'alimentation électrique entre lesquelles les brins sont électriquement en série et adaptés pour pouvoir s'échauffer par effet Joule, de sorte que l'alimentation électrique dudit faisceau permet, à partir d'une valeur d'intensité d'un courant électrique parcourant les brins correspondant à leur échauffement au-delà de la température de transformation, d'entraîner un effort de déformation en flexion du faisceau.

Un dispositif d'articulation selon l'invention peut être mis en oeuvre dans de nombreuses applications, et notamment pour des applications nécessitant un unique mouvement de déploiement ou de pliage. Il est notamment utile dans le cas de structures pliées que l'on souhaite déplier à distance, par exemple les panneaux solaires d'un satellite que l'on envoie pliés pour réduire le volume à bord d'un lanceur et que l'on souhaite pouvoir déployer dans l'espace. Il s'agit alors d'un usage unique en déploiement du dispositif d'articulation.

Rien n'empêche cependant de prévoir un tel dispositif qui soit réutilisable plusieurs fois, pour des pliages et déploiements répétés, avec ou sans verrouillage en position déployée et/ou en position pliée ; par exemple avec au moins un faisceau en matériau à mémoire de forme du type à double sens, ou avec au moins deux faisceaux en matériau à mémoire de forme fonctionnant alternativement en sens inverses (l'un se fléchit vers une forme mémorisée en forçant la flexion du deuxième, et le deuxième se redresse vers une forme mémorisée en forçant le redressement du premier).

De plus, un dispositif d'articulation selon l'invention relie deux pièces d'extrémité, c'est-à-dire qu'une pièce d'extrémité peut être montée à chacune des extrémités du dispositif d'articulation. Le dispositif d'articulation assure une articulation entre ces deux pièces d'extrémité mobiles l'une par rapport à l'autre.

Des pièces d'extrémité selon l'invention ou des éléments d'extrémité au sens général peuvent être de tous types, par exemple des mâts, des panneaux, un couvercle et une structure principale, etc...

Un faisceau selon l'invention est constitué d'au moins deux brins, c'est-à-dire deux éléments filiformes, reliant chacun les deux pièces d'extrémité d'un dispositif d'articulation selon l'invention. Dans un mode de réalisation avantageux, ces brins sont réalisés à partir d'un même fil d'âme en matériau à mémoire de forme, de section constante, et disposé dans une gaine isolante. Les brins issus d'un tel fil présentent donc tous la même section. Dans un mode de réalisation avantageux de l'invention, l'ensemble des brins d'un faisceau est en fait un seul et unique fil plusieurs fois replié aux extrémités du faisceau.

Les brins d'un faisceau selon l'invention présentent avantageusement une âme en matériau à mémoire de forme qui est conducteur d'électricité, ce qui est le cas de la plupart des alliages à mémoire de forme. En outre un tel matériau à mémoire de forme présente une résistivité non-nulle et suffisante à son échauffement et par effet Joule dans l'environnement dans lequel un dispositif selon l'invention est destiné à être utilisé. Notamment pour des dispositifs d'articulation destinés à être montés sur un système spatial, le matériau à mémoire de forme doit présenter une résistivité non-nulle aux températures régnant dans l'espace.

Par ailleurs, des brins selon l'invention présentent aussi, avantageusement, une isolation électrique sur leur surface externe latérale. Cette isolation peut être réalisée de différentes manières, par exemple avec un vernis, avec une gaine isolante, ou encore en moulant l'ensemble des brins du faisceau dans un matériau électriquement isolant.

On peut donc choisir la section des brins d'un faisceau en fonction de la résistivité, de l'intensité de courant disponible et de la température de transformation du matériau à mémoire de forme utilisé. Alternativement on peut aussi choisir un matériau à mémoire de forme en fonction de sa résistivité et de sa température de transformation pour satisfaire des critères d'encombrement d'un dispositif d'articulation selon l'invention (nombre de faisceaux, nombre de brins par faisceau, section de chaque brin etc.).

Cette isolation latérale est nécessaire. En effet, les brins d'un faisceau selon l'invention sont mécaniquement jointifs, c'est-à-dire qu'ils sont disposés côte à côte latéralement en contact mécanique les uns avec les autres. Les brins peuvent être réalisés jointifs de différentes manières, ainsi, ils peuvent par exemple être littéralement collés les uns aux autres. Selon un autre exemple de réalisation, ils peuvent être maintenus au sein d'un faisceau, par exemple par des pinces, tout en disposant d'une certaine liberté de glisser longitudinalement les uns par rapport aux autres afin d'éviter de trop fortes tensions longitudinales lors d'une flexion importante.

Avantageusement, le faisceau est et reste un faisceau à brins jointifs quelle que soit la forme géométrique qu'il adopte. Cette disposition du matériau à mémoire de forme en faisceau à brins jointifs permet de multiplier la puissance mécanique développée à volume égal de matériau à mémoire de forme. Cette disposition permet aussi de conserver un faisceau résistant dans le temps, et notamment d'éviter qu'il ne s'effile après de nombreux cycles de pliage et déploiement.

Les brins étant latéralement jointifs, l'isolation électrique latérale permet d'éviter un court-circuit lorsque les brins sont parcourus par un courant électrique.

En effet, dans la présente invention, les brins d'un même faisceau sont connectés électriquement en série de sorte que le courant parcourt avantageusement toute la longueur d'un premier brin avant de se propager à un deuxième brin, et ainsi de suite. Un tel faisceau oppose ainsi une résistance électrique de valeur substantielle au passage du courant qui est au moins égale à la somme des résistances électriques individuelles de chacun des brins qui le constituent.

Un faisceau selon l'invention est donc constitué de brins reliés électriquement en série les uns aux autres et mécaniquement en parallèle les uns par rapport aux autres. De cette manière, chaque brin peut fournir un travail élémentaire qui contribue au travail total du faisceau, ledit travail total correspondant en fait à la somme des travails élémentaires des brins du faisceau.

On peut donc choisir la section des brins d'un faisceau en fonction de la résistivité et de la température de transformation du matériau à mémoire de forme utilisé. Alternativement on peut aussi choisir un matériau à mémoire de forme en fonction de sa résistivité et de sa température de transformation pour satisfaire des critères d'encombrement d'un dispositif d'articulation selon l'invention (nombre de faisceaux, nombre de brins par faisceau, section de chaque brin etc.).

Cette disposition de brins jointifs et connectés en série au sein d'un faisceau présente de nombreux avantages.

Ainsi, le courant électrique nécessaire au chauffage des brins par effet Joule est bien inférieur au courant électrique nécessaire au chauffage par effet Joule d'un volume de matériau à mémoire de forme « en bloc ». Cette caractéristique est un avantage important dans le cas où le dispositif d'articulation est embarqué à bord de systèmes autonomes dont on souhaite économiser les ressources en énergie ou qui ne sont pas adaptés pour fournir des courants d'intensité élevée, par exemple à bord des véhicules, des systèmes spatiaux tels que les satellites, ou des aéronefs.

De plus, l'ensemble des brins se déforme conjointement, c'est-à-dire simultanément (étant chauffés par un même courant électrique) et vers la même forme, de sorte qu'ils tendent vers une même forme mémorisée qui correspond à la forme mémorisée du faisceau qu'ils constituent.

Les brins d'un même faisceau exercent des efforts mécaniques individuels simultanés en parallèle, l'effort mécanique total d'un faisceau étant une somme des efforts individuels de chaque brin.

Le rapport de l'énergie mécanique développée sur l'intensité électrique fournie est donc très nettement amélioré.

Chaque faisceau présente avantageusement plus de deux brins.

Aussi, plusieurs faisceaux au sens électrique peuvent être imbriqués au sein d'une même structure allongée (un même actionneur mécanique). C'est-à-dire que deux séries indépendantes de brins connectés en série sont électriquement en parallèle dans une même structure allongée reliant deux pièces d'extrémité. Dans la présente invention un faisceau est un faisceau au sens électrique du terme : une série de brins connectés en série électriquement. Plusieurs faisceaux peuvent être mécaniquement regroupés en un même actionneur.

Un faisceau selon l'invention présente donc une connexion électrique à chacune de ses extrémités électriques (première extrémité du premier brin et seconde extrémité du brin terminal) adaptée pour relier chaque jeu de brins en série à une alimentation électrique externe non-décrite dans la présente invention.

Chacun des faisceaux peut être relié électriquement indépendamment à une alimentation électrique. Alternativement, au moins deux, plusieurs, ou l'ensemble des faisceaux peuvent être reliés électriquement les uns aux autres en série.

Un faisceau selon l'invention est en particulier apte à :
- maintenir un dispositif d'articulation dans une première position pliée ou déployée, notamment dans une position pliée,
- motoriser le dispositif d'articulation en pliage et/ou en déploiement de façon contrôlée,
- amortir des chocs avant, pendant et après le déploiement (et/ou le pliage) du dispositif d'articulation,
- verrouiller le dispositif d'articulation dans une deuxième position (respectivement déployée ou pliée), notamment dans une position déployée.

Avantageusement et selon l'invention, le matériau à mémoire de forme est du type à simple sens, restant dans sa forme mémorisée même après refroidissement au-dessous de sa température de transformation.

Avec un matériau à mémoire de forme du type simple sens, on peut réaliser des faisceaux en nombre pair en opposition de fonctionnement permettant des phases successives de pliage et de déploiement. Pour cela on alimente un premier groupe (la moitié du nombre total) de faisceaux pour le pliage du dispositif d'articulation, lesdits faisceaux tendant vers une forme mémorisée fléchie déforment les autres faisceaux en même temps qu'ils plient l'articulation. Puis, le premier groupe de faisceaux n'étant plus alimenté (voire refroidi), on alimente le second groupe qui tend vers une forme mémorisée déployée et déforme le premier groupe de faisceaux en même temps qu'il déploie l'articulation.

Cependant, on cherche souvent à réaliser des dispositifs d'articulation à usage unique, c'est-à-dire qui ne servent qu'à un unique mouvement de pliage ou à un unique mouvement de déploiement. Tel est le cas par exemple pour des dispositifs d'articulation permettant de lancer un satellite avec ses panneaux solaires repliés pour réduire le volume au lancement et qui se déploient une unique fois lorsque le satellite est dans l'espace.

Ainsi, dans le cas d'un dispositif d'articulation à sens unique, l'ensemble des faisceaux se déforment d'une forme précontrainte pliée (respectivement déployée) vers une forme mémorisée déployée (respectivement pliée) sous l'effet d'un chauffage, notamment d'un chauffage au-delà de leur température de transformation.

En outre, avantageusement et selon l'invention, ledit dispositif d'articulation comporte un joint d'articulation reliant mécaniquement les deux pièces d'extrémité, et adapté pour pouvoir occuper au moins une position pliée et au moins une position déployée.

Un dispositif d'articulation selon l'invention peut comporter un tel joint d'articulation, sans que cela soit nécessaire. En effet, un joint d'articulation selon l'invention a pour fonction d'assurer une liaison mécanique articulée entre deux pièces d'extrémités. Aussi, un dispositif d'articulation ne comprenant aucun joint d'articulation est prévu par l'invention. Dans tous les modes de réalisation, le dispositif en matériau à mémoire de forme, notamment les faisceaux, assurent aussi cette fonction d'articulation entre les deux pièces d'extrémité.

Un joint d'articulation selon l'invention peut être de tous types dès lors qu'il assure une articulation en flexion et/ou en rotation entre au moins une position pliée et au moins une position déployée. Il est avantageusement réalisé par une liaison en matériau élastique en flexion, c'est-à-dire possédant intrinsèquement des propriétés élastiques ou sous forme d'éléments assez fins pour que le matériau soit rendu élastique en flexion. Il peut notamment être automoteur, c'est-à-dire emmagasiner une énergie préalable à son déploiement (ou à son pliage) qu'il libère pour réaliser un déploiement (respectivement un pliage) de façon autonome.

Cependant rien n'empêche qu'un tel joint d'articulation ne comporte pas de matériau élastique. Il peut ainsi, par exemple, être constitué d'éléments mécaniques formant une liaison mécanique en flexion et/ou rotation, par exemple une charnière, une rotule, un palier lisse, un palier à roulement, ...

De plus, dans un dispositif selon l'invention un joint d'articulation relie deux pièces d'extrémité, c'est-à-dire qu'une pièce d'extrémité est montée à chacune des extrémités du joint d'articulation. Le joint d'articulation assure une articulation entre ces deux pièces d'extrémité mobiles l'une par rapport à l'autre.

Avantageusement, chacune des extrémités longitudinales d'un faisceau selon l'invention est fixée respectivement à l'une des deux pièces d'extrémité et/ou à l'une des deux extrémités du joint d'articulation. Ainsi, le faisceau est apte à entraîner le joint d'articulation entre une position pliée et une position déployée et/ou entre une position déployée et une position pliée.

Un faisceau selon l'invention est en particulier apte à :
- maintenir un joint d'articulation dans une première position pliée ou déployée, notamment dans une position pliée, que le joint soit automoteur ou non,
- accompagner le joint d'articulation, c'est-à-dire assurer des fonctions de :
   o motorisation si le joint d'articulation est passif ou bloqué,
   o contrôle de la vitesse de déploiement (et/ou de pliage) du joint d'articulation si ce dernier est automoteur, par exemple dans le cas où le joint d'articulation comporte une pièce élastique (ressort, joint de Carpentier, etc.),
   o amortissement des chocs avant, pendant et après le déploiement (et/ou le pliage) du joint d'articulation,
- verrouiller le joint d'articulation dans une deuxième position (respectivement déployée ou pliée), notamment dans une position déployée.

En effet, en chauffant un faisceau en matériau à mémoire de forme selon l'invention au dessus de sa température de transformation, il tend à se déformer en flexion vers une forme mémorisée correspondant à une plage de températures situées au-delà de la plage des températures auxquelles ils se déforment d'une forme vers une autre, et ce quel que soit le joint d'articulation qui lui est associé dans un dispositif selon l'invention.

En outre, avantageusement et selon l'invention, ledit joint d'articulation est un joint automoteur à partir d'une position pliée et auto-verrouillant en position déployée, comportant au moins une bande, dite bande courbe, à section droite transversale courbe de courbure concave monotone en position déployée, chaque bande courbe étant adaptée pour être pliée élastiquement en flexion avec des contraintes élastiques de flexion aptes à actionner au moins partiellement le déploiement dudit dispositif d'articulation.

Une bande est une portion de matériau d'épaisseur bien inférieure au reste des ses dimensions. Un exemple de bande courbe telle que décrite ci-dessus est un joint (ou lame) de Carpentier.

Une bande courbe selon l'invention est un profilé à section concave vue d'un côté, et convexe vue du côté opposé. Elle présente un axe longitudinal correspondant à sa direction principale, le long de sa dimension la plus grande (longueur), en position déployée. Une coupe par un plan orthogonal à cet axe longitudinal, c'est-à-dire une section droite transversale, d'une telle bande courbe présente une courbe de courbure qui est toujours du même signe, exempte de point d'inflexion.

Une bande courbe selon l'invention est pliée dans une position initiale dans laquelle elle emmagasine de l'énergie mécanique sous forme élastique. Elle libère cette énergie en se déployant, de sorte que son énergie potentielle élastique en position déployée est inférieure à son énergie potentielle élastique en position pliée. Ainsi, elle présente une position stable en position déployée et une position instable en position pliée.

De plus, la courbure des bandes courbes à l'état déployé forme un effet de pliage qui produit une très grande résistance en flambage du dispositif d'articulation en position déployée et donc un verrouillage de l'articulation en position déployée.

Cependant il arrive qu'une bande courbe, notamment du type de joint de Carpentier, se bloque en cours de déploiement et/ou se déverrouille de sa position déployée sous l'effet de chocs externes. Un ou plusieurs faisceau(x) selon l'invention présente(nt) donc l'avantage de procurer une force motrice pour passer les éventuels points de blocage en cours de déploiement d'un joint d'articulation comportant une(de) telle(s) bande(s) courbe(s). Ce(s) faisceau(x) procure(nt) aussi un verrouillage en position déployée. En effet le matériau à mémoire de forme présente une forme stable, dite forme mémorisée en position déployée. En particulier, un matériau à mémoire de forme de type simple sens ayant rejoint sa forme mémorisée est dans une forme stable quelle que soit la température à laquelle il se trouve.

Avantageusement et selon l'invention, dans un mode de réalisation ledit joint d'articulation comporte trois bandes courbes, dont deux, situées latéralement de part et d'autre de la troisième, présentent une concavité orientée dans le même sens, de sens contraire à l'orientation de la concavité de la troisième bande courbe.

L'orientation d'une concavité peut par exemple être représentée par le vecteur somme des vecteurs représentant l'accélération d'un objet parcourant à vitesse linéaire constante la section droite d'une bande courbe du côté concave de la bande, ou par exemple par le vecteur somme des vecteurs normaux unitaires en chaque point de la surface concave.

Dans ce mode de réalisation, la concavité de deux des trois bandes courbes est orientée dans le même sens, c'est-à-dire que l'on obtient la position de la seconde bande courbe par une translation simple de la position de la première bande courbe. La concavité de la troisième bande courbe est orientée sur la même direction dans le sens contraire, c'est-à-dire qu'on obtient la position de la troisième bande courbe par une rotation de l'une des deux premières bandes courbes de 180° autour de son axe longitudinal et d'une translation.

De plus les deux premières bandes sont situées latéralement de part et d'autre de la troisième bande centrale (les orientations de leur concavité ne sont pas colinéaires mais parallèles). Cette structure permet non seulement de plier les trois bandes courbes orthogonalement à leur axe longitudinal pour emmagasiner une énergie élastique, mais elle permet aussi un guidage de l'articulation afin qu'elle se déploie selon une seule direction fixe en évitant toute rotation parasite autour d'un axe longitudinal du dispositif d'articulation pendant son déploiement.

En outre, les trois bandes courbes peuvent être ou non placées dans le même plan. Avantageusement au moins les deux bandes courbes dont la concavité est orientée dans le même sens sont placées dans un même plan.

De nombreuses autres manières de disposer une ou plusieurs bande(s) courbe(s) pour réaliser un joint d'articulation selon l'invention peuvent être envisagées. Par exemple, les trois bandes courbes peuvent être réparties concentriquement autour d'un même axe, leur concavité étant orientée vers cet axe, de sorte qu'elles forment une enveloppe théorique ellipsoïdale - en particulier cylindrique de révolution - autour de cet axe.

Par ailleurs, plusieurs bandes peuvent être formées à partir d'une même paroi de forme ondulée appropriée dans laquelle on pratique des ouvertures séparant des bandes courbes formées par les bandes de paroi restante.

Avantageusement et selon l'invention, dans un autre mode de réalisation ledit joint d'articulation comprend une paroi tubulaire présentant au moins deux ouvertures longitudinales séparant au moins deux bandes courbes longitudinales

La paroi tubulaire présente une forme de tube en position complètement déployée. Ce tube peut présenter différents profils en coupe droite transversale, notamment un profil ellipsoïdal, en particulier un profil circulaire.

La paroi tubulaire permet de réaliser les bandes courbes dans un même matériau de même épaisseur, et de former des bandes courbes facilement en formant des ouvertures longitudinales sur ladite paroi tubulaire. Les ouvertures pratiquées dans la paroi sont donc de forme complémentaire des bandes courbes. De telles ouvertures s'étendent longitudinalement selon l'axe principal du tube formé par la paroi tubulaire en position déployée.

Le nombre d'ouvertures longitudinales de la paroi déterminent le nombre de bandes courbes formées : il y a autant de bandes courbes que d'ouvertures longitudinales. Au minimum deux ouvertures sont pratiquées dans ladite paroi tubulaire, c'est-à-dire qu'elle comporte au moins deux bandes courbes.

En particulier, avantageusement et selon l'invention, ladite paroi tubulaire présente trois ouvertures latérales réparties uniformément sur son diamètre et séparant trois bandes courbes longitudinales.

Lorsqu'un tel joint d'articulation est en position pliée, deux des trois bandes courbes de la paroi tubulaire sont avantageusement pliées dans un sens et la troisième est pliée dans l'autre sens.

En outre, un dispositif d'articulation selon l'invention présente deux faisceaux montés à l'extérieur et de chaque côté de l'espace compris à l'intérieur de l'enveloppe théorique de ladite paroi tubulaire.

Un joint d'articulation sous la forme d'une paroi tubulaire sépare l'espace en deux, entre un espace, dit espace intérieur, confiné par l'enveloppe théorique de la paroi tubulaire, et le reste de l'espace, dit espace extérieur. De sorte que deux faisceaux de brins selon l'invention sont à l'extérieur des joints d'articulation.

Avantageusement les deux faisceaux sont disposés de part et d'autre du joint d'articulation. Ils définissent ainsi, en position déployée, un plan contenant les axes principaux de chacun des deux faisceaux en position déployée.

Un dispositif d'articulation selon l'invention est avantageusement plié d'un côté ou de l'autre de ce plan, de manière à plier les deux faisceaux selon une courbure similaire, sans provoquer d'extension et/ou de rétraction exagérée de l'un ou de l'autre. En particulier, les deux faisceaux ne sont pas montés de telle manière qu'en position pliée un premier faisceau présente un rayon de courbure supérieur au rayon de courbure du joint d'articulation et un deuxième faisceau présente un rayon de courbure inférieur au rayon de courbure du joint d'articulation.

Cette disposition est aussi avantageuse pour un dispositif d'articulation selon l'invention présentant plus de deux faisceaux.

De manière générale, les faisceaux sont avantageusement montés autour dudit joint d'articulation de manière à ne pas interférer dans le pliage des bandes courbes.

Alternativement, chaque faisceau d'un dispositif d'articulation selon l'invention comporte de 2 à 10 000 brins connectés en série électriquement, en particulier entre 10 et 500 brins connectés en série électriquement.

Un tel faisceau s'étend longitudinalement le long d'une bande courbe, et il est situé avantageusement et majoritairement dans l'espace compris entre ladite bande courbe et un plan contenant au moins l'une des cordes de ladite bande courbe. En particulier un faisceau est majoritairement compris dans l'espace délimité par ladite bande courbe et un plan contenant deux de ses plus grandes cordes, lesdites cordes étant distinctes. Un tel faisceau est « dans » la concavité formée par une bande courbe.

Cette disposition permet de réaliser un dispositif d'articulation selon l'invention plus compact que lorsque les faisceaux sont disposés à l'extérieur du joint d'articulation. Le faisceau situé dans la concavité d'une bande courbe peut être au contact de cette dernière.

De plus, le nombre de bandes courbes comportant un faisceau logé dans sa concavité peut varier. Par exemple deux bandes courbes symétriques sur trois peuvent présenter un faisceau selon l'invention dans leur concavité. De même, une même bande courbe peut présenter plusieurs faisceaux logés dans sa concavité.

Ainsi, avantageusement, un dispositif d'articulation selon l'invention comprend deux faisceaux disposés chacun entre une bande courbe et un plan comprenant une corde de ladite bande courbe.

Un faisceau d'un des dispositifs selon l'invention présente des caractéristiques choisies en fonction des différents modes de réalisation et/ou applications du dispositif d'articulation selon l'invention. En effet les caractéristiques techniques d'un faisceau peuvent être choisies par exemple en fonction : du nombre de faisceaux sur le dispositif d'articulation, de la nature du joint d'articulation (notamment automoteur ou non), des dimensions du dispositif d'articulation, de la puissance d'effort devant être développé par chacun des faisceaux, du type d'effort devant être développé par un faisceau (motorisation ou freinage par exemple), des conditions extérieures du déploiement (respectivement du pliage) (par ex. dans un fluide, dans l'espace, à une certaine température, ...), etc..

En particulier dans un faisceau selon l'invention, on peut par exemple choisir : le matériau à mémoire de forme, la longueur du faisceau, le nombre de brins, la section efficace en matériau à mémoire de forme de chaque brin, le matériau isolant entre les brins, etc...

On peut choisir le matériau à mémoire de forme en fonction de sa résistivité, et on adapte notamment, en fonction du couple mécanique que l'on souhaite obtenir le nombre de faisceaux, le nombre et la longueur des brins d'un faisceau, la section efficace de chaque brin.

Avantageusement et selon l'invention, chaque faisceau comporte de 2 à 10 000 brins connectés en série électriquement.

Un plus grand nombre de brins permet d'augmenter la résistance électrique, et donc d'obtenir un chauffage plus important à courant électrique d'intensité égale. De plus, un très grand nombre de brins permet de développer un effort plus important chaque brin contribuant à l'effort total développé par le faisceau auquel il appartient.

Notamment, avantageusement et selon l'invention, chaque faisceau comporte de 10 à 500 brins connectés en série électriquement.

En outre, un dispositif d'articulation selon l'invention est avantageusement adapté pour pouvoir être monté sur un satellite, chaque joint d'articulation et chaque faisceau étant dans une position pliée au lancement, et destinés à être déployés en micropesanteur dans l'espace.

En effet, l'invention propose un dispositif d'articulation de dimensions réduites, de poids faible, simple et fiable, procurant un déploiement unique et un verrouillage en position déployée, amortissant d'éventuels chocs ou vibrations avant, pendant et après son déploiement, dont la vitesse de déploiement est contrôlée, et ne consommant que peu d'énergie électrique, notamment ne requérant qu'une intensité électrique faible par rapport à la puissance mécanique développée.

L'invention concerne aussi un dispositif d'articulation caractérisé en combinaison par tout ou partie des caractéristiques mentionnées ci-dessus ou ci-après.

L'invention s'étend aussi à tout système spatial équipé d'au moins un dispositif d'articulation caractérisé en combinaison de tout ou partie des caractéristiques mentionnées ci-dessus ou ci-après. En particulier l'invention s'étend à tout système spatial équipé d'un tel dispositif d'articulation pour pouvoir présenter au moins un élément, par exemple un(des) panneau(x) photovoltaïque(s), en position pliée au lancement, destiné(s) à être déployé(s) et verrouillé(s) en micropesanteur dans l'espace.

D'autres buts, caractéristiques et avantages de l'invention apparaissent à la lecture de la description suivante de deux modes de réalisation préférentiels donnés à titre d'exemples non limitatifs, et qui se réfèrent aux figures annexées dans lesquelles :
- la figure 1a est une vue schématique d'un dispositif d'articulation selon un premier mode de réalisation conforme à l'invention comportant une paroi tubulaire présentant trois ouvertures, dans une position pliée,
- la figure 1b est une vue schématique d'un dispositif d'articulation selon l'invention, conforme à la figure 1a, dans une position déployée,
- la figure 1c est une vue schématique d'un dispositif d'articulation selon l'invention, en coupe transversale selon le plan I-I de la figure 1b,
- la figure 2a est une vue schématique d'un dispositif d'articulation selon un deuxième mode de réalisation conforme à l'invention comportant trois bandes courbes, dans une position pliée,
- la figure 2b est une vue schématique d'un dispositif d'articulation, conforme à la figure 2a, dans une position déployée,
- la figure 2c est une vue schématique d'un dispositif d'articulation, en coupe transversale selon le plan II-II de la figure 2b,
- la figure 3a est une vue schématique d'un dispositif d'articulation selon un troisième mode de réalisation conforme à l'invention comportant deux pièces d'extrémité réalisant un joint d'articulation de type liaison pivot de par leur complémentaires, dans une position pliée,
- la figure 3b est une vue schématique d'un dispositif d'articulation selon l'invention, conforme à la figure 3a, dans une position déployée.

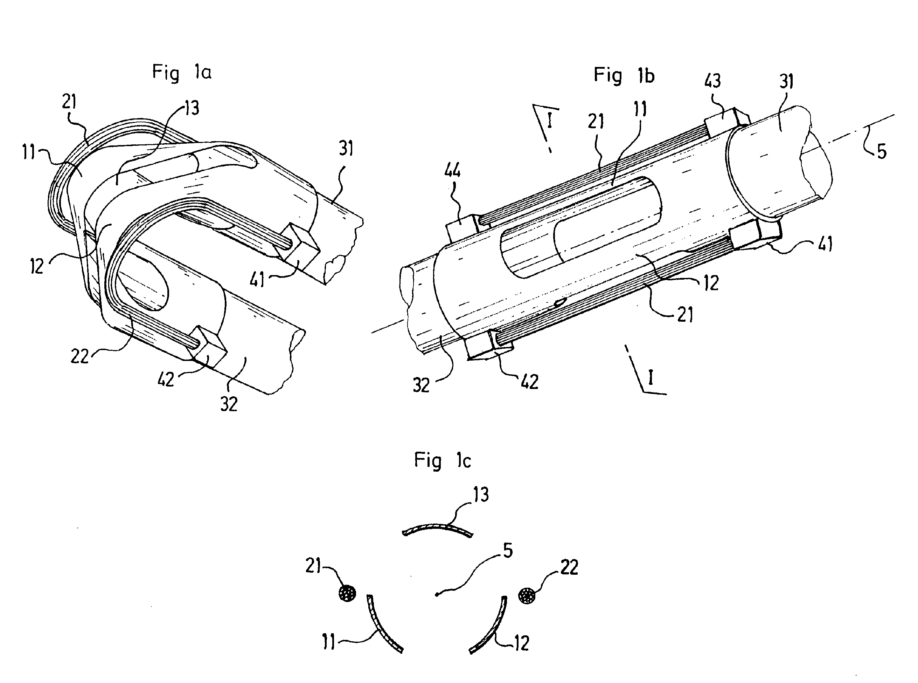

Un dispositif d'articulation selon un premier mode de réalisation représenté sur les figures 1a, 1b et 1c présente un joint d'articulation sous la forme d'une paroi tubulaire reliant deux pièces 31, 32 d'extrémité, cylindriques et montées chacune dans un embout longitudinal du joint d'articulation.

Le dispositif d'articulation présente une direction 5 principale longitudinale en position déployée (figure 1b). Le joint d'articulation tubulaire présente une enveloppe théorique cylindrique de révolution autour d'un axe, dit axe 5 longitudinal.

Le joint d'articulation présente trois ouvertures formant trois bandes 11, 12, 13 courbes de courbure monotone constante dont la face concave est orientée vers l'axe 5 longitudinal. Les ouvertures de la paroi tubulaire sont de forme oblongue, orientées dans le sens longitudinal et parallèles les unes aux autres. Ces ouvertures sont aussi de forme identique et uniformément réparties autour du périmètre de la paroi tubulaire, c'est-à-dire qu'elles sont à 120° l'une de l'autre par rapport à l'axe 5 longitudinal. De sorte que les trois bandes 11, 12, 13 courbes sont identiques et elles aussi uniformément réparties autour du périmètre de la paroi tubulaire, à 120° l'une de l'autre par rapport à l'axe 5 longitudinal.

En position pliée représentée sur la figure 1a, deux bandes 11, 12 courbes sont repliées sur elles-mêmes sur leur face interne, c'est-à-dire que leurs faces concaves (faisant face à l'axe 5 longitudinal en position déployée) se retrouvent en vis-à-vis en position pliée. La troisième bande 13 courbe est repliée sur elle-même sur sa face externe, c'est-à-dire que sa face convexe (située du côté externe de la paroi tubulaire en position déployée) se retrouve en vis-à-vis en position pliée. Rien n'empêche de plier un tel joint d'articulation dans un autre sens, notamment dans le sens opposé.

Dans ce mode de réalisation deux faisceaux 21, 22 identiques sont disposés à l'extérieur du joint d'articulation, de part et d'autre de ce dernier. Ils sont donc symétriques par une rotation de 180° par rapport à l'axe 5 longitudinal.

Chaque faisceau 21, 22 est constitué d'un unique fil dont l'âme est un matériau à mémoire de forme conducteur d'électricité et présentant une gaine électriquement isolante. Dans chaque faisceau 21, 22, ledit fil est plusieurs fois replié sur lui-même aux extrémités du faisceau, de sorte qu'il forme un faisceau constitué de plusieurs brins identiques connectés en série et latéralement électriquement isolés les uns des autres. Le nombre de ces brins peut varier par exemple entre 10 et 10000 notamment être de l'ordre de 20.

Les brins constituant chacun des faisceaux 21, 22 sont collés les uns aux autres de sorte qu'ils forment mécaniquement un faisceau d'un seul tenant. Un seul jeu de brins électriquement en série constitue chaque faisceau.

Chacun des faisceaux 21, 22 est mécaniquement fixé à chacun des embouts du joint d'articulation par des points 41, 42, 43, 44 de fixation à proximité des extrémités des faisceaux longitudinales de manière à ce que les faisceaux puissent accompagner le joint d'articulation dans son mouvement de déploiement.

En effet, le matériau à mémoire de forme utilisé pour réaliser les faisceaux 21, 22 est un matériau à mémoire de forme simple sens dont l'unique forme mémorisée correspond à une position déployée représentée sur la figure 1b. Il est donc préalablement déformé sous contrainte dans sa forme pliée représentée à la figure 1a, puis il est actionné grâce à un courant électrique fourni par une alimentation électrique externe non représentée sur les figures, qui lui permet de s'échauffer par effet Joule jusqu'à sa température de transformation au-delà de laquelle il exerce un effort en flexion tendant à déployer le dispositif d'articulation d'une position représentée sur la figure 1a vers une position déployée représentée sur la figure 1b.

Par exemple, on peut utiliser un alliage à mémoire de forme dans la famille des alliages Nickel-Titane de résistivité comprise entre 0,5.10⁻⁶ Ω.m et 1,1.10⁻⁶ Ω.m (respectivement en phase austénitique et martensitique), et dont la plage de températures de transformation se situe entre 70 et 90 degrés Celsius. En conséquence on peut prévoir un faisceau de 20 brins en alliage Ni-Ti de section 0,63 mm pour un chauffage par effet Joule par un courant d'intensité 1 Ampère. Un tel dispositif permet d'obtenir un couple compris entre 0,1 et 30 N.m, notamment de l'ordre de grandeur de 1 N.m.

Dans ce mode de réalisation particulier, le matériau en alliage à mémoire de forme passe d'une température ambiante à une température d'environ 100°C en quelques minutes (environ 2 minutes). Ainsi on obtient une déformation complète d'une première forme à une forme mémorisée dans un temps généralement compris entre 1 minute et 90 min, notamment en environ 2 à 10 minutes.

Chaque faisceau 21, 22 et donc chaque brin de ce faisceau a été déformé sous contrainte dans la même forme pliée. La position des faisceaux par rapport au joint d'articulation détermine donc dans quel sens l'articulation pourra être pliée, soit d'un côté ou de l'autre du plan contenant chacun des deux faisceaux 21, 22 en position déployée. En effet, dans le cas où le nombre de bandes courbes sur un joint d'articulation de type paroi tubulaire est impair, comme dans l'exemple représenté aux figures 1a, 1b et 1c, il existe une forte dissymétrie entre l'un et l'autre des deux sens dans lesquels l'articulation peut être pliée.

Par ailleurs, chaque faisceau et donc chaque brin de ce faisceau présente la même forme mémorisée sensiblement rectiligne telle que représentée sur la figure 1b.

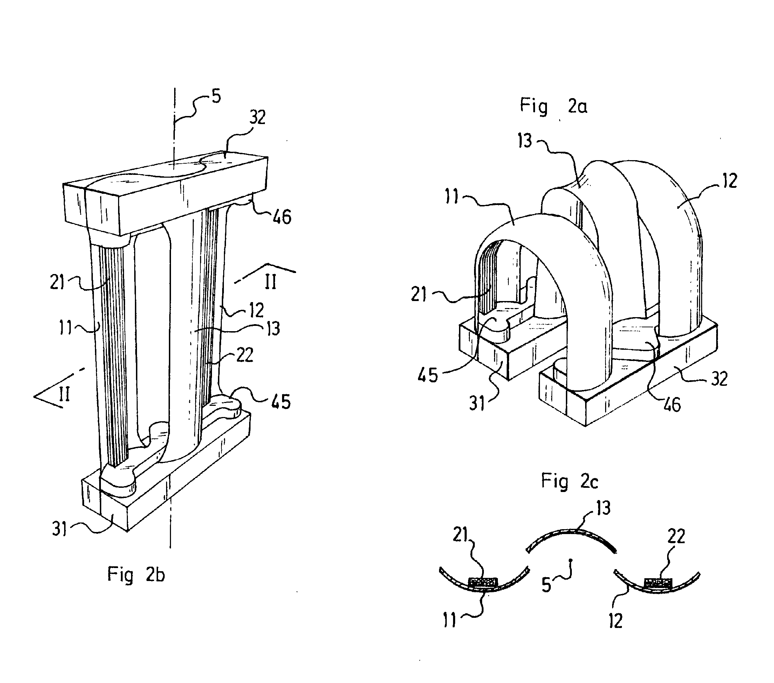

Un dispositif d'articulation selon un deuxième mode de réalisation représenté sur les figures 2a, 2b et 2c présente un joint d'articulation constitué de trois bandes 11, 12, 13 courbes reliant deux pièces 31, 32 d'extrémité auxquelles elles sont fixées.

Le dispositif d'articulation présente une direction 5 principale longitudinale en position déployée (figure 2b) et une symétrie par rapport à cet axe 5 longitudinal.

Deux bandes 11, 12 courbes externes du joint d'articulation sont sensiblement dans un même premier plan P1 et elles sont symétriques par rapport à un second plan P2 orthogonal au premier plan et contenant l'axe 5 longitudinal. Une troisième bande 13 courbe centrale présente un axe de symétrie longitudinal parallèle à l'axe 5 longitudinal contenu par ce second plan P2. La bande 13 courbe centrale peut être obtenue par une rotation de 180° et une translation de l'une quelconque des deux bandes 11, 12 courbes externes, de sorte que sa concavité est orientée dans la même direction mais dans un sens opposé aux concavités des deux bandes 11, 12 courbes externes. Les trois bandes courbes sont donc géométriquement identiques.

La bande 13 courbe centrale est sensiblement dans un plan P2 parallèle au premier plan P1 dans lequel se trouvent les deux bandes 11, 12 courbes externes.

Cette disposition des bandes 11, 12, 13 courbes permet de créer une dissymétrie du joint d'articulation qui n'est donc autorisé à se plier que dans deux sens, d'un côté ou de l'autre du plan P1 (ou P2).

En position pliée représentée sur la figure 2a, les deux bandes 11, 12 courbes externes sont repliées sur elles-mêmes sur leur face interne, c'est-à-dire que leur face concave se retrouve en vis-à-vis en position pliée. La bande 13 courbe centrale est repliée sur elle-même sur sa face externe, c'est-à-dire que sa face convexe se retrouve en vis-à-vis en position pliée. En position pliée, la bande 13 courbe centrale dépasse entre les deux bandes 11, 12 courbes externes. Il y a donc une distance latérale suffisante entre chaque bande 11, 12 courbes externes et la bande 13 courbe centrale. Rien n'empêche de plier un tel joint d'articulation dans le sens opposé.

Dans ce mode de réalisation deux faisceaux 21, 22 identiques sont disposés à l'intérieur du joint d'articulation. Ils sont chacun logé longitudinalement dans la concavité de l'une des bandes 11, 12 courbes externes. Ils sont donc symétriques par rapport au plan P2.

Chaque faisceau 21, 22 est constitué d'un unique fil dont l'âme est un matériau à mémoire de forme conducteur d'électricité et présentant une gaine électriquement isolante. Dans chaque faisceau 21, 22, ledit fil est plusieurs fois replié sur lui-même aux extrémités du faisceau, de sorte qu'il forme un faisceau constitué de plusieurs brins identiques connectés en série et latéralement électriquement isolés les uns des autres. Le nombre de ces brins peut varier par exemple entre 10 et 10000 notamment être de l'ordre de 20.

Les brins constituant chacun des faisceaux 21, 22 sont collés les uns aux autres de sorte qu'ils forment un faisceau monobloc mécaniquement.

Chacun des faisceaux est mécaniquement fixé à chacune des pièces 31, 32 d'extrémité par des étriers 45, 46 de fixation de manière à ce qu'ils puissent accompagner le joint d'articulation dans son mouvement de déploiement.

En effet, le matériau à mémoire de forme utilisé pour réaliser les faisceaux 21, 22 est un matériau à mémoire de forme simple sens dont l'unique forme mémorisée correspond à une position déployée représentée sur la figure 2b. Il est donc préalablement déformé sous contrainte dans sa forme pliée représentée à la figure 2a, puis il est actionné grâce à un courant électrique fourni par une alimentation électrique externe non représentée sur les figures, qui lui permet de s'échauffer par effet Joule jusqu'à sa température de transformation au-delà de laquelle il exerce un effort en flexion tendant à déployer le dispositif d'articulation d'une position représentée sur la figure 2a vers une position déployée représentée sur la figure 2b.

Par exemple, on peut utiliser un alliage à mémoire de forme dans la famille des alliages nickel-titane de résistivité comprise entre 0,5.10⁻⁶ Ω.m et 1,1.10⁻⁶ Ω .m (respectivement en phase austénitique et martensitique), et dont la plage de températures de transformation se situe entre 70 et 90 degrés Celsius. En conséquence on peut prévoir un faisceau de 20 brins en alliage Ni-Ti de section 0,63 mm pour un chauffage par effet Joule par un courant d'intensité 1 Ampère. Un tel dispositif permet d'obtenir un couple compris entre 0,1 et 30 N.m, notamment de l'ordre de grandeur de 1 N.m.

Dans ce mode de réalisation particulier, le matériau en alliage à mémoire de forme passe d'une température ambiante à une température d'environ 100°C en quelques minutes (environ 2 minutes). Ainsi on obtient une déformation complète d'une première forme à une forme mémorisée dans un temps généralement compris entre 1 minute et 90 min, notamment en environ 2 à 10 minutes.

Chaque faisceau 21, 22 et donc chaque brin de ce faisceau a été déformé sous contrainte dans la même forme pliée.

Par ailleurs, chaque faisceau et donc chaque brin de ce faisceau présente la même forme mémorisée sensiblement rectiligne telle que représentée sur la figure 2b.

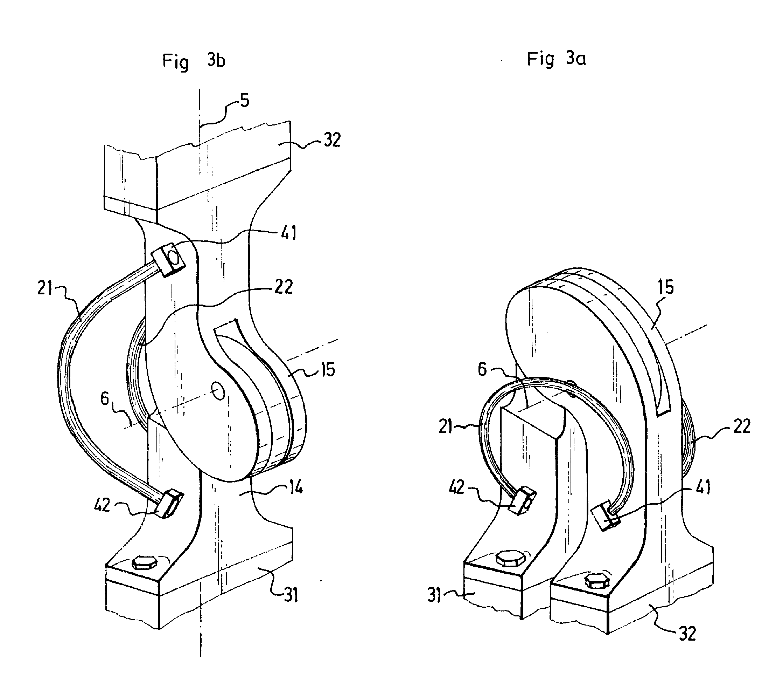

Un dispositif d'articulation selon un troisième mode de réalisation représenté sur les figures 3a et 3b présente un joint d'articulation sous la forme de deux pièces 14, 15 d'articulation formant un joint d'articulation. Ce joint d'articulation réalise une liaison pivot autour d'un axe 6 d'articulation.

De plus, les deux pièces 14, 15 d'articulation sont respectivement reliées à deux pièces 31, 32 d'extrémité mobiles l'une par rapport à l'autre.

Le dispositif d'articulation présente une direction 5 principale longitudinale en position déployée (figure 3b).

Dans ce mode de réalisation, le joint d'articulation constitué des pièces 14, 15 d'articulation n'est pas automoteur. Les faisceaux 21, 22 en matériau à mémoire de forme sont donc les seuls organes moteurs pour le déploiement du dispositif d'articulation d'une position pliée (figure 3a) à une position déployée (figure 3b).

Les faisceaux 21, 22 assurent aussi une fonction de verrouillage du joint d'articulation en position déployée.

Dans ce mode de réalisation deux faisceaux 21, 22 identiques sont disposés à l'extérieur du joint d'articulation, de part et d'autre de ce dernier. Ils sont donc symétriques par rapport à un plan contenant l'axe 5 longitudinal.

Chaque faisceau 21, 22 est constitué d'un unique fil dont l'âme est un matériau à mémoire de forme conducteur d'électricité et présentant une gaine électriquement isolante. Dans chaque faisceau 21, 22, ledit fil est plusieurs fois replié sur lui-même aux extrémités du faisceau, de sorte qu'il forme un faisceau constitué de plusieurs brins identiques connectés en série et latéralement électriquement isolés les uns des autres. Le nombre de ces brins peut varier par exemple entre 10 et 10000 notamment être de l'ordre de 20.

Les brins constituant chacun des faisceaux 21, 22 sont collés les uns aux autres de sorte qu'ils forment mécaniquement un faisceau d'un seul tenant. Un seul jeu de brins électriquement en série constitue chaque faisceau.

Chacun des faisceaux 21, 22 est mécaniquement fixé à chacune des pièces 14, 15 d'articulation du joint d'articulation par deux points 41, 42 de fixation à proximité des extrémités longitudinales des faisceaux, de manière à ce que lesdits faisceaux puissent accompagner le joint d'articulation dans son mouvement de déploiement.

En effet, le matériau à mémoire de forme utilisé pour réaliser les faisceaux 21, 22 est un matériau à mémoire de forme simple sens dont l'unique forme mémorisée correspond à une position déployée représentée sur la figure 3b. Il est donc préalablement déformé sous contrainte dans sa forme pliée représentée à la figure 3a, puis il est actionné grâce à un courant électrique fourni par une alimentation électrique externe non représentée sur les figures, qui lui permet de s'échauffer par effet Joule jusqu'à sa température de transformation au-delà de laquelle il exerce un effort en flexion tendant à déployer le dispositif d'articulation d'une position représentée sur la figure 3a vers une position déployée représentée sur la figure 3b.

Par exemple, on peut utiliser un alliage à mémoire de forme dans la famille des alliages nickel-titane de résistivité comprise entre 0,5.10⁻⁶ Ω.m et 1,1.10⁻⁶ Ω .m (respectivement en phase austénitique et martensitique), et dont la plage de températures de transformation se situe entre 70 et 90 degrés Celsius. En conséquence on peut prévoir un faisceau de 20 brins en alliage Ni-Ti de section 0,63 mm pour un chauffage par effet Joule par un courant d'intensité 1 Ampère. Un tel dispositif permet d'obtenir un couple compris entre 0,1 et 30 N.m, notamment de l'ordre de grandeur de 1 N.m.

Dans ce mode de réalisation particulier, le matériau en alliage à mémoire de forme passe d'une température ambiante à une température d'environ 100°C en quelques minutes (environ 2 minutes). Ainsi on obtient une déformation complète d'une première forme à une forme mémorisée dans un temps généralement compris entre 1 minute et 90 min, notamment en environ 2 à 10 minutes.

Chaque faisceau 21, 22 et donc chaque brin de ce faisceau a été déformé sous contrainte dans la même forme pliée.

Par ailleurs, chaque faisceau et donc chaque brin de ce faisceau présente sensiblement la même forme mémorisée telle que représentée sur la figure 3b.

L'invention peut faire l'objet de nombreuses variantes par rapport aux modes de réalisation décrits ci-dessus et représentés sur les figures.

En particulier, elle peut ne pas comporter de joint d'articulation, l'articulation entre deux pièces d'extrémité n'étant alors réalisée que par des faisceaux en matériau à mémoire de forme.

De plus, lorsqu'elle comporte au moins un joint d'articulation, elle s'applique à tous types et toutes formes de joint d'articulation. Ainsi, Rien n'empêche d'utiliser de joint d'articulation mettant en oeuvre d'autres éléments d'articulation que des bandes courbes (joints de Carpentier), ou un nombre différent et/ou une répartition différente des bandes courbes.

Notamment, rien n'empêche d'utiliser un joint d'articulation n'étant pas auto-verrouillé en position déployée (ou en position pliée), associé par exemple à des matériaux à mémoire de forme de type double sens, pour réaliser un dispositif d'articulation capable de se plier et de se déployer plusieurs fois.

De plus il est possible de choisir entre les différents matériaux à mémoire de forme connus en fonction de leurs caractéristiques propres pour réaliser les faisceaux de brins.

Un dispositif d'articulation selon l'invention peut d'ailleurs comporter un nombre différent de faisceaux et d'autres répartitions de ces derniers. Le nombre de brins, leur longueur, leur section, leur matériau à mémoire de forme, leur isolant, etc., de chaque faisceau doivent être adaptés à chaque application d'un dispositif d'articulation selon l'invention.

Aussi, rien n'empêche qu'un faisceau en matériau à mémoire de forme présente une longueur différente en position pliée qu'en position déployée, notamment dans le cas d'un matériau à mémoire de forme qui se rétracte ou s'allonge entre l'une et l'autre des positions.

## Revendications

1. Dispositif d'articulation reliant deux pièces (31, 32) d'extrémité, adapté pour pouvoir occuper au moins une position pliée et au moins une position déployée, et comportant un dispositif en matériau à mémoire de forme reliant les deux pièces d'extrémité, **caractérisé en ce que** :
- le dispositif en matériau à mémoire de forme comprend au moins un faisceau (21, 22) de brins de fil en matériau à mémoire de forme électriquement conducteur, latéralement adjacents et latéralement électriquement isolés les uns des autres, chaque brin tendant à se déformer en flexion à partir d'une température, dite température de transformation, vers une forme mémorisée,
- ladite forme mémorisée de chaque brin de chaque faisceau (21, 22) étant choisie de telle sorte qu'une déformation conjointe en flexion de chacun des brins vers ladite forme mémorisée corresponde à une déformation en flexion du faisceau (21, 22),
- chaque faisceau (21, 22) comprend deux bornes d'alimentation électrique entre lesquelles les brins sont électriquement en série et adaptés pour pouvoir s'échauffer par effet Joule, de sorte que l'alimentation électrique dudit faisceau (21, 22) permet, à partir d'une valeur d'intensité d'un courant électrique parcourant les brins correspondant à leur échauffement au-delà de la température de transformation, d'entraîner un effort de déformation en flexion du faisceau (21, 22).

2. Dispositif d'articulation selon la revendication 1, **caractérisé en ce que** le matériau à mémoire de forme est du type à simple sens, restant dans sa forme mémorisée même après refroidissement au-dessous de sa température de transformation.

3. Dispositif d'articulation selon l'une des revendications 1 ou 2, **caractérisé en ce qu'**il comporte en outre un joint d'articulation reliant mécaniquement les deux pièces (31, 32) d'extrémité, et adapté pour pouvoir occuper au moins une position pliée et au moins une position déployée.

4. Dispositif d'articulation selon la revendication 3, **caractérisé en ce que** ledit joint d'articulation est un joint automoteur à partir d'une position pliée et auto-verrouillant en position déployée, comportant au moins une bande, dite bande (11, 12, 13) courbe, à section droite transversale courbe de courbure concave monotone en position déployée, chaque bande (11, 12, 13) courbe étant adaptée pour être pliée élastiquement en flexion avec des contraintes élastiques de flexion aptes à actionner au moins partiellement le déploiement dudit dispositif d'articulation.

5. Dispositif d'articulation selon la revendication 4, **caractérisé en ce que** ledit joint d'articulation comporte trois bandes (11, 12, 13) courbes, dont deux, situées latéralement de part et d'autre de la troisième, présentent une concavité orientée dans le même sens, de sens contraire à l'orientation de la concavité de la troisième bande (13) courbe.

6. Dispositif d'articulation selon l'une des revendications 4 ou 5, **caractérisé en ce que** ledit joint d'articulation comprend une paroi tubulaire présentant au moins deux ouvertures latérales séparant au moins deux bandes courbes longitudinales.

7. Dispositif d'articulation selon la revendication 6, **caractérisé en ce que** ladite paroi tubulaire présente trois ouvertures latérales réparties uniformément sur son diamètre et séparant trois bandes (11, 12, 13) courbes longitudinales.

8. Dispositif d'articulation selon l'une des revendications 6 ou 7, **caractérisé en ce qu'**il présente deux faisceaux (21, 22) montés à l'extérieur et de chaque côté de l'espace comprit à l'intérieur de l'enveloppe théorique de ladite paroi tubulaire.

9. Dispositif d'articulation selon l'une des revendications 4 à 8, **caractérisé en ce qu'**il comprend au moins un faisceau (21, 22) disposé entre une bande (11, 12, 13) courbe et un plan comprenant une corde de ladite bande courbe.

10. Dispositif d'articulation selon la revendication 9, **caractérisé en ce qu'**il comprend deux faisceaux (21, 22) disposés chacun entre une bande (11, 12, 13) courbe et un plan comprenant une corde de ladite bande courbe.

11. Dispositif d'articulation selon l'une des revendications 1 à 10, **caractérisé en ce que** chaque faisceau (21, 22) comporte de 2 à 10 000 brins connectés en série électriquement, en particulier entre 10 à 500 brins connectés en série électriquement.

12. Système spatial **caractérisé en ce qu'**il comprend au moins un dispositif d'articulation, selon l'une des revendications 1 à 11 pour pouvoir présenter au moins un élément en position pliée au lancement, chaque élément étant destiné à passer en position déployée verrouillée dans l'espace.

## Patentansprüche

1. Gelenkvorrichtung, die zwei Endteile (31, 32) miteinander verbindet, dazu ausgelegt, um mindestens eine zusammengeklappte Position und mindestens eine entfaltete Position einnehmen zu können, und umfassend eine Vorrichtung aus einem Formgedächtnis-Material, das die zwei Endteile miteinander verbindet, **dadurch gekennzeichnet, dass**:
- die Vorrichtung aus Formgedächtnis-Material mindestens ein Bündel (21, 22) von Fadenstücken aus elektrisch leitfähigem Formgedächtnis-Material umfasst, seitlich benachbart und seitlich voneinander elektrisch isoliert, wobei jeder Faden dazu neigt, sich ab einer Temperatur, Transformationstemperatur genannt, unter Biegung in eine gespeicherte Form zu verformen,
- wobei die gespeicherte Form jedes Fadens jedes Bündels (21, 22) derart gewählt ist, dass eine gemeinsame Verformung unter Biegung jedes der Fäden in die gespeicherte Form einer Verformung unter Biegung des Bündels (21, 22) entspricht,
- jedes Bündel (21, 22) zwei Klemmen zur elektrischen Versorgung umfasst, zwischen denen die Fäden elektrisch in Reihe angeordnet und ausgelegt sind, um sich durch den Jouleeffekt erwärmen zu können, so dass die elektrische Versorgung des Bündels (21, 22) ermöglicht, ab einem Intensitätswert eines elektrischen Stroms, der durch die Fäden läuft, der ihrer Erwärmung über die Transformationstemperatur hinaus entspricht, eine Verformungskraft unter Biegung des Bündels (21, 22) auszubilden.

2. Gelenkvorrichtung nach Anspruch 1, **dadurch gekennzeichnet, dass** das Formgedächtnis-Material vom Typ mit einer einfachen Richtung ist, das auch nach der Abkühlung unter seine Transformationstemperatur in seiner gespeicherten Form bleibt.

3. Gelenkvorrichtung nach einem der Ansprüche 1 oder 2, **dadurch gekennzeichnet, dass** sie außerdem eine Gelenkverbindung umfasst, die mechanisch die zwei Endstücke (31, 32) miteinander verbindet, und dazu ausgelegt ist, um mindestens eine zusammengeklappte Position und mindestens eine entfaltete Position einnehmen zu können.

4. Gelenkvorrichtung nach Anspruch 3, **dadurch gekennzeichnet, dass** die Gelenkverbindung eine automatische Verbindung aus einer zusammengeklappten Position und selbstverriegelnd in einer entfalteten Position ist, umfassend mindestens ein Band, bezeichnet als gekrümmtes Band (11, 12, 13), mit einem gekrümmten quer liegenden geraden Abschnitt mit einer monotonen konkaven Krümmung in der entfalteten Position, wobei jedes gekrümmte Band (11, 12, 13) ausgelegt ist, um unter Biegung elastisch mit elastischen Biegungsspannungen zusammengeklappt zu werden, um so mindestens teilweise die Entfaltung der Gelenkvorrichtung betätigen zu können.

5. Gelenkvorrichtung nach Anspruch 4, **dadurch gekennzeichnet, dass** die Gelenkverbindung drei gekrümmte Bänder (11, 12, 13) umfasst, wovon zwei, die seitlich auf beiden Seiten des dritten angeordnet sind, eine Konkavität aufweisen, die in die gleiche Richtung gerichtet ist, mit entgegen gesetzter Richtung zur Ausrichtung der Konkavität des dritten gekrümmten Bandes (13).

6. Gelenkvorrichtung nach einem der Ansprüche 4 oder 5, **dadurch gekennzeichnet, dass** die Gelenkverbindung eine rohrförmige Wand umfasst, die mindestens zwei seitliche Öffnungen aufweist, die mindestens zwei längsgerichtete gekrümmte Bänder voneinander trennen.

7. Gelenkvorrichtung nach Anspruch 6, **dadurch gekennzeichnet, dass** die röhrförmige Wand drei seitliche Öffnungen aufweist, die gleichförmig auf ihrem Durchmesser verteilt sind und drei längsgerichtete gekrümmte Bänder (11, 12, 13) trennen.

8. Gelenkvorrichtung nach einem der Ansprüche 6 oder 7, **dadurch gekennzeichnet, dass** sie zwei Bündel (21, 22) aufweist, die an der Außenseite und auf jeder Seite des Raums montiert sind, der im Inneren der theoretischen Umhüllung der rohrförmigen Wand enthalten ist.

9. Gelenkvorrichtung nach einem der Ansprüche 4 bis 8, **dadurch gekennzeichnet, dass** sie mindestens ein Bündel (21, 22) umfasst, das zwischen einem gekrümmten Band (11, 12, 13) und einer Ebene angeordnet ist, die ein Seil des gekrümmten Bandes umfasst.

10. Gelenkvorrichtung nach Anspruch 9, **dadurch gekennzeichnet, dass** sie zwei Bündel (21, 22) umfasst, die jeweils zwischen einem gekrümmten Band (11, 12, 13) und einer Ebene angeordnet sind, die ein Seil des gekrümmten Bandes umfasst.

11. Gelenkvorrichtung nach einem der Ansprüche 1 bis 10, **dadurch gekennzeichnet, dass** jedes Bündel (21, 22) zwischen 2 und 10 000 Fäden umfasst, die elektrisch in Reihe verbunden sind, insbesondere zwischen 10 und 500 Fäden, die elektrisch in Reihe verbunden sind.

12. Räumliches System, **dadurch gekennzeichnet, dass** es mindestens eine Gelenkvorrichtung nach einem der Ansprüche 1 bis 11 umfasst, um mindestens ein Element in der zusammengeklappten Position am Beginn aufweisen zu können, wobei jedes Element ausgelegt ist, um im Raum in die verriegelte entfaltete Position überzugehen.

## Claims

1. Articulation device connecting two end pieces (31, 32), said device being suitable to be able to occupy at least one folded position and at least one deployed position, and including a device made of shape-memory material connecting the two end pieces, **characterised in that**:
- the device made of shape-memory material comprises at least one bundle (21, 22) of strands of wire made of electrically conductive shape-memory material, said strands being laterally adjacent to one another and laterally electrically insulated from one another, each strand tending to be flexurally deformed to a memorised shape starting from a certain temperature, called the transformation temperature,
- said memorised shape of each strand of each bundle (21, 22) being selected so that a linked flexural deformation of each of the strands to said memorised shape corresponds to a flexural deformation of the bundle (21, 22),
- each bundle (21, 22) includes two electrical supply terminals, between which the strands are electrically in series and suitable to be able to be heated up by Joule effect, so that the electrical supply of said bundle (21, 22) enables a flexural deformation load on the bundle (21, 22) to be brought about, starting from an intensity value of an electric current flowing through the strands corresponding to their heating to beyond the transformation temperature.

2. Articulation device according to Claim 1, **characterised in that** the shape-memory material is of the one-way type, remaining in its memorised shape even after cooling to below its transformation temperature.

3. Articulation device according to one of Claims 1 or 2, **characterised in that** said device further includes an articulated joint mechanically connecting the two end pieces (31, 32) and suitable to be able to occupy at least one folded position and at least one deployed position.

4. Articulation device according to Claim 3, **characterised in that** said articulated joint is a self-propelling joint starting from a folded position and a self-locking joint in the deployed position, including at least one strip, called a curved strip (11, 12, 13), having a curved cross section of monotonic concave curvature in the deployed position, each curved strip (11, 12, 13) being suitable to be flexurally folded elastically with elastic flexural stresses capable of actuating, at least partially, the deployment of said articulation device.

5. Articulation device according to Claim 4, **characterised in that** said articulated joint includes three curved strips (11, 12, 13), two of which, situated laterally on either side of the third, have a concavity oriented in the same direction, in a direction opposite to the orientation of the concavity of the third curved strip (13).

6. Articulation device according to one of Claims 4 or 5, **characterised in that** said articulated joint includes a tubular wall having at least two lateral openings separating at least two longitudinal curved strips.

7. Articulation device according to Claim 6, **characterised in that** said tubular wall has three lateral openings uniformly distributed over its diameter and separating three longitudinal curved strips (11, 12, 13).

8. Articulation device according to one of Claims 6 or 7, **characterised in that** said device exhibits two bundles (21, 22) mounted on the outside and on each side of the space contained within the theoretical envelope of said tubular wall.

9. Articulation device according to one of Claims 4 to 8, **characterised in that** said device includes at least one bundle (21, 22) arranged between a curved strip (11, 12, 13) and a plane including a chord of said curved strip.

10. Articulation device according to Claim 9, **characterised in that** said device includes two bundles (21, 22) each arranged between a curved strip (11, 12, 13) and a plane including a chord of said curved strip.

11. Articulation device according to one of Claims 1 to 10, **characterised in that** each bundle (21, 22) comprises from 2 to 10,000 strands electrically connected in series, in particular from 10 to 500 strands electrically connected in series.

12. Space system, **characterised in that** said system includes at least one articulation device according to one of Claims 1 to 11, in order to be able to exhibit at least one element in the folded position at launch, each element being intended to pass into the locked deployed position in space.
